# EUROPÄISCHE PATENTSCHRIFT

(11) **EP 2 053 352 B1**
(45) Veröffentlichungstag und Bekanntmachung des Hinweises auf die Patenterteilung: **10.06.2020**
(21) Anmeldenummer: 08018503.6
(22) Anmeldetag: 22.10.2008
(51) Int. Cl.: G01B 13/08

(54) **Vorrichtung und Verfahren zur pneumatischen Messung eines Außenmaßes von Werkstücken**
Device and method for pneumatically measuring the external dimensions of work pieces
Dispositif et procédé de mesure pneumatique d'une dimension extérieure de pièces usinées

(30) Priorität: 23.10.2007 DE 102007050603
(43) Veröffentlichungstag der Anmeldung: 29.04.2009
(73) Patentinhaber: STOTZ FEINMESSTECHNIK GmbH, D-70839 Gerlingen (DE)
(72) Erfinder: Stamenkovic, Milan, Dr., 70469 Stuttgart (DE)
(74) Vertreter: Manitz Finsterwald Patent- und Rechtsanwaltspartnerschaft mbB

(56) Entgegenhaltungen:
- EP-A- 0 538 771
- GB-A- 2 020 031
- JP-A- 58 055 708
- US-A- 4 550 592

## Beschreibung

Die vorliegende Erfindung betrifft eine Vorrichtung und ein Verfahren zur pneumatischen Messung eines Außenmaßes von Werkstücken, insbesondere eines Außendurchmessers von zylindrischen Werkstücken, mit zwei voneinander beabstandeten und mit ihren Austrittsöffnungen aufeinander zuweisenden Messdüsen, einem Druckluftversorgungskanal für die Messdüsen und einem Wandler zur Umwandlung des sich in dem Druckluftversorgungskanal der Messdüsen bei einer Messung an einem Werkstück ergebenden Staudrucks in einen Messwert.

Bekannte Vorrichtungen dieser Art umfassen einen Ring, der an seinem Innenumfang mit zwei einander gegenüberliegenden Messdüsen versehen ist. Die beiden Messdüsen werden über eine gemeinsame Druckluftversorgung mit Druckluft versorgt und ein gemeinsamer Druckluftkanal verzweigt sich in zwei Teilkanäle, die zu je einer Messdüse führen. Der Messring wird über das zu messende Werkstück geführt und die Druckluftversorgung wird eingeschaltet. Das Werkstück bewirkt bei jeder Messdüse einen Gegendruck. Beide Gegendrücke addieren sich aufgrund des gemeinsamen Versorgungskanals, so dass der gemessene Gesamtgegendruck der Summe der Abstände zwischen den beiden Messdüsen und dem Werkstück entspricht. Dadurch kann das Außenmaß des Werkstücks zwischen den beiden Messdüsen berechnet werden.

Nachteilig bei dieser Messvorrichtung ist, dass der Druckluftversorgungskanal sehr lang ist, woraus sich verhältnismäßig lange Messzeiten ergeben. Zudem muss für jede Werkstückgröße ein eigener Messring vorgesehen werden.

Die GB 1 125 732 A offenbart eine Vorrichtung nach dem Oberbegriff des Anspruchs 1. Weiterer Stand der Technik ist aus der JP-A-58 055 708, der US 4 550 592 und der EP-A-538 771 bekannt.

Aufgabe der vorliegenden Erfindung ist es, eine verbesserte Vorrichtung und ein verbessertes Verfahren zur pneumatischen Messung eines Außenmaßes von Werkstücken anzugeben.

Die Aufgaben werden jeweils mit den Merkmalen der unabhängigen Patentansprüche gelöst. Weiterbildungen der Erfindung sind in den Unteransprüchen angegeben.

Bei der Vorrichtung zur pneumatischen Messung eines Außenmaßes von Werkstücken ist jeder Messdüse ein eigener Wandler zugeordnet und die Druckluftversorgungskanäle sind von den Messdüsen bis zumindest zu den Wandlern voneinander getrennt.

Dadurch kann die Strecke in einem Druckluftkanal zwischen einer Düse und dem der Düse zugeordneten Wandler gegenüber der entsprechenden Strecke bei der bekannten Vorrichtung mit dem Messring stark verkürzt werden. Dies führt dazu, dass die Messzeit zur Messung des Gegendrucks, der sich bei Beaufschlagung des zu messenden Werkstücks mit Druckluft in den Druckluftversorgungskanälen einstellt und der dem Staudruck in dem entsprechenden Druckluftversorgungskanal entspricht, gegenüber der herkömmlichen Vorrichtung mit Messring stark verkürzt wird. Dadurch lässt sich insgesamt die Messzeit zur Messung des Außenmaßes von Werkstücken gegenüber der bekannten Vorrichtung mit Messring entsprechend verkürzen. Aufgrund der kurzen Messzeit können Werkstücke auch in Bewegung gemessen werden. Dadurch ist es möglich, von einer Maschine, beispielsweise einer Centerless-Schleifmaschine, ausgegebene Werkstücke direkt bei der Ausgabe zu vermessen.

Ein Vorteil der erfindungsgemäßen Vorrichtung ist ferner, dass die Düsen einzeln angeordnet sein können und daher auf einen Messring verzichtet werden kann, so dass die erfindungsgemäße Vorrichtung auch für verschiedene Werkstücksgrößen verwendet werden kann. Zudem ist dadurch die Reinigung der Messdüsen erleichtert.

Nach einer Ausführungsform der Erfindung handelt es sich bei den beiden Wandlern um pneumatisch-elektrische Wandler, die zur Umwandlung des im jeweiligen Druckluftversorgungskanal gemessenen Drucks in ein elektrisches Signal ausgebildet sind. Damit ist eine einfache Auswertung möglich.

Insbesondere kann jeder der beiden pneumatisch-elektrischen Wandler dazu ausgebildet sein, den sich im Druckluftversorgungskanal der jeweiligen Messdüse bei einer Messung an einem Werkstück ergebenden Staudruck in einen elektrischen Messwert umzuwandeln. Jeder Wandler kann ferner dazu ausgebildet sein, unter Verwendung des elektrischen Messwerts den Abstand der dem Wandler zugeordneten Messdüse zu einem zwischen den beiden Messdüsen angeordneten Werkstück zu ermitteln und diesen dann als insbesondere elektrisches Signal auszugeben. Hierbei ist vorteilhaft, dass die Ermittlung der jeweiligen Abstände direkt durch die Wandler besonders schnell durchführbar ist, was eine Messung an einem sich bewegenden Werkstück begünstigt.

Nach einer Ausführungsform der Erfindung sind Auswertemittel vorgesehen, um das gesuchte Außenmaß unter Verwendung der beiden von den pneumatisch-elektrischen Wandlern ermittelten Abstände zu bestimmen.

Die Auswertemittel können insbesondere dazu ausgebildet sein, die Summe der beiden von den Wandlern ermittelten Abstände zu berechnen. Sodann können die Auswertemittel die Differenz aus einem bekannten, beispielsweise zuvor gemessenen Abstand zwischen den beiden Messdüsen und der Summe der beiden Abstände der jeweiligen Messdüsen zu dem zu messenden Werkstück berechnen. Die Differenz entspricht dem Außenmaß des Werkstücks, die von den Auswertemitteln ausgegeben werden kann.

Erfindungsgemäß ist der Abstand der Messdüsen voneinander verstellbar und messbar. Damit lässt sich die Vorrichtung an die Größe des zu messenden Werkstücks anpassen. Insbesondere werden damit nicht, wie bei der bekannten Vorrichtung mit Messring, für jede Werkstückgröße eigene Messvorrichtungen benötigt. Vielmehr können mit einer erfindungsgemäßen Vorrichtung unterschiedlich große Werkstücke vermessen werden.

Nach einer Ausführungsform der Erfindung sind die beiden Messdüsen gemeinsam in einer ersten Richtung senkrecht zu ihrer Abstandsrichtung relativ zum Werkstück beweglich. Alternativ kann das Werkstück relativ zu den beiden Messdüsen in der ersten Richtung senkrecht zu ihrer Abstandsrichtung beweglich sein. Bevorzugterweise ist die Abstandsrichtung der beiden Messdüsen horizontal ausgerichtet und die erste Richtung verläuft längs einer Vertikalen.

Damit wird es möglich, die Messdüsen längs der ersten Richtung relativ zum Werkstück zu positionieren, indem beispielsweise ein Verlauf der Außenmaße des Werkstücks in Abhängigkeit der ersten Richtung kontinuierlich oder schrittweise gemessen, ein bestimmtes Außenmaß, beispielsweise ein maximales Außenmaß, des Werkstücks aus den gemessenen Außenmaßen ermittelt und die Messdüsen so positioniert werden, dass das bestimmte Außenmaß exakt zwischen diesen angeordnet ist.

Nach einer Ausführungsform der Erfindung sind die beiden Messdüsen gemeinsam in einer zweiten Richtung senkrecht zu ihrer Abstandsrichtung und senkrecht zur ersten Richtung relativ zum Werkstück bewegbar. Alternativ kann das Werkstück relativ zu den beiden Messdüsen in der zweiten Richtung bewegbar sein. Insbesondere handelt es sich bei der zweiten Richtung um eine horizontale Richtung. Damit wird es möglich, den Verlauf der Außenmaße des Werkstücks in der zweiten Richtung schrittweise oder kontinuierlich zu messen.

Erfindungsgemäß sind die Messdüsen jeweils auf einem Kreuzschlitten angeordnet. Kreuzschlitten werden auch als Zweiachsschlitten oder XY-Schlitten bezeichnet. Damit kann vorteilhaft eine Beweglichkeit der Messdüsen in zwei zueinander senkrechten Richtungen erreicht werden.

Bevorzugterweise erlaubt der Kreuzschlitten eine Verstellung der Position der auf diesem angeordneten Messdüse längs der Abstandsrichtung der beiden Messdüsen und in der hierzu senkrechten ersten Richtung. Durch die Verstellmöglichkeit längs der Abstandsrichtung der beiden Messdüsen kann der Abstand zwischen den beiden Messdüsen eingestellt und an die Abmessungen des zu messenden Werkstücks angepasst werden. Durch die Verstellmöglichkeit in der ersten Richtung kann der Verlauf der Außenmaße des Werkstücks in dieser Richtung gemessen werden.

Erfindungsgemäß ist jedem Kreuzschlitten eine Arretiereinrichtung, insbesondere Elektrobremse, zugeordnet, um den Kreuzschlitten in einer festen Position zu arretieren. Damit lassen sich die auf den Kreuzschlitten angeordneten Messdüsen jeweils in einer gewünschten Position arretieren. Das zu vermessende Werkstück lässt sich dann zwischen den Messdüsen hindurchbewegen und vermessen.

Erfindungsgemäß ist jede Messdüse mit dem zugeordneten Wandler in einem Messkopf angeordnet. Der Messkopf bildet ein Gehäuse für den Wandler und die Messdüse und damit einen Schutz vor Beschädigung.

Weiterhin betrifft die Erfindung ein Verfahren zur Messung eines Außenmaßes eines Werkstücks mit einer erfindungsgemäßen Vorrichtung. Dabei wird das Werkstück zwischen den beiden Messdüsen positioniert und die beiden Messdüsen werden gemeinsam in einer ersten Richtung senkrecht zur Abstandsrichtung der beiden Messdüsen in eine gewünschte Messposition relativ zum Werkstück gebracht und dann die Messung gestartet. Alternativ hierzu kann das Werkstück relativ zu den beiden Messdüsen bewegt werden, um die Messposition zu erreichen.

Ausführungsbeispiele der Erfindung sind in den Zeichnungen dargestellt und werden nachfolgend beschrieben. Es zeigen, jeweils in schematischer Darstellung
- Fig. 1: eine Vorderansicht auf eine erfindungsgemäße Vorrichtung,
- Fig. 2: eine perspektivische Darstellung einer erfindungsgemäßen Messvorrichtung,
- Fig. 3: eine weitere Vorderansicht auf eine erfindungsgemäße Messvorrichtung, und
- Fig. 4: einen herkömmlichen Messring.

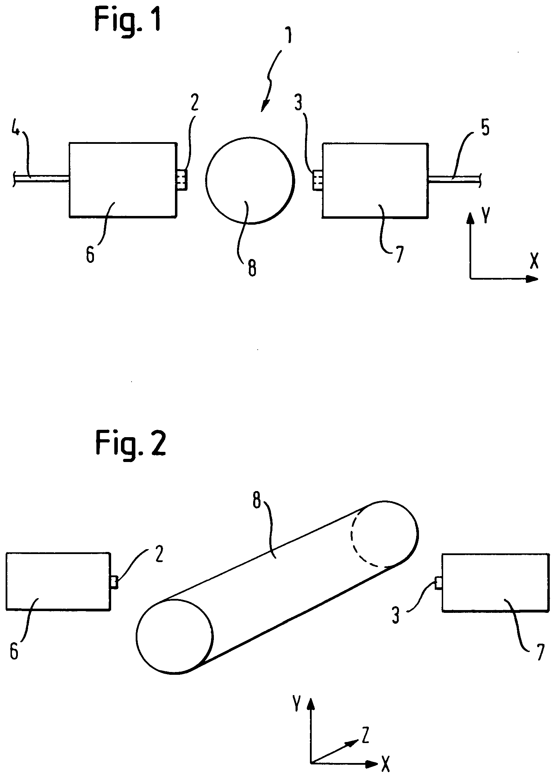

Fig. 1 zeigt eine Vorderansicht auf eine erfindungsgemäße Vorrichtung 1 mit zwei voneinander beabstandeten und mit ihren Austrittsöffnungen aufeinander zuweisenden Messdüsen 2, 3, die jeweils über einen eigenen Druckluftversorgungskanal 4, 5 mit Druckluft versorgt werden. Hinter jeder Messdüse 2, 3 ist jeweils ein pneumatisch-elektrischer Wandler 6, 7 angeordnet.

Die aus den Düsen 2, 3 austretende Luft erzeugt je nach Abstand zum zu prüfenden Werkstück 8 einen Staudruck im jeweiligen Druckluftversorgungskanal 4, 5, der von dem jeweiligen pneumatisch-elektrischen Wandler 6, 7 gemessen wird. Der Staudruck ist ein Maß für den Abstand zwischen der Messdüse 2, 3 und dem Werkstück 8. Unter Verwendung des Staudrucks ermittelt der jeweilige pneumatisch-elektrische Wandler 6, 7 den Abstand der jeweiligen ihm zugeordneten Messdüse 2, 3 zum Werkstück 8.

Bei bekanntem Abstand der beiden Messdüsen 2, 3 voneinander lässt sich aus der Differenz zwischen dem Abstand der beiden Messdüsen 2, 3 und der Summe der beiden Abstände der Messdüsen 2, 3 zum Werkstück 8 das Außenmaß des Werkstücks längs der Abstandsrichtung der beiden Messdüsen 2, 3 ermitteln.

Die beiden Messdüsen 2, 3 können jeweils zusammen mit den ihnen zugeordneten pneumatisch-elektrischen Wandlern 6, 7 auf Kreuzschlitten angeordnet sein, so dass die beiden Messdüsen 2, 3 längs der horizontalen X-Achse und der vertikalen Y-Achse verstellbar sind. Längs der X-Achse lässt sich der Abstand zwischen den beiden Messdüsen 2, 3 voneinander einstellen und insbesondere an die Außenabmessungen des Werkstücks 8 anpassen. Längs der senkrechten Y-Achse lassen sich die beiden Messdüsen 2, 3 relativ zum Werkstück 8 verstellen, um sie relativ zum Werkstück 8 zu positionieren.

Beispielsweise kann das Werkstück 8 einen kreisförmigen Querschnitt in der XY-Ebene haben. Durch gemeinsames Verschieben der Messdüsen 2, 3 längs der Y-Achse können die beiden Messdüsen 2, 3 auf Höhe des Durchmessers des Werkstücks 8 positioniert werden. Dies kann durch Messung des Werkstückaußenmaße erfolgen, indem der Verlauf der Außenmaße in Y-Richtung gemessen und die Messdüsen 2, 3 auf Höhe des größten gemessenen Außenmaßes positioniert werden.

Wie in Fig. 2 dargestellt ist, kann es sich bei dem Werkstück 8 beispielsweise um ein zylinderförmiges Teil handeln. Wie in Bezug auf Fig. 1 erwähnt ist, können die beiden Messdüsen 2, 3 längs der Y-Achse derart positioniert werden, dass diese den Außendurchmesser des zylinder- beziehungsweise walzenförmigen Werkstücks 8 messen.

Die Messdüsen 2, 3 können jeweils zusammen mit den ihnen zugeordneten pneumatisch-elektrischen Wandlern 6, 7 längs der Z-Achse, die senkrecht zur X- und Y-Achse verläuft, verstellbar sein, so dass der Außendurchmesser des walzenförmigen Werkstücks 8 längs der Z-Achse schrittweise oder kontinuierlich gemessen werden kann.

Alternativ kann das Werkstück 8 zwischen den beiden Messdüsen 2, 3 längs der Z-Achse hindurchgeführt werden, um so den Verlauf des Außendurchmessers des Werkstücks 8 längs der Z-Achse schrittweise oder kontinuierlich zu messen. Insbesondere kann die Messvorrichtung unmittelbar an eine Werkzeugmaschine, aus welcher das Werkstück ausgegeben wird, angeordnet werden, um das Werkstück zu vermessen. Die Messung kann dabei aufgrund der kurzen Messzeiten der erfindungsgemäßen Vorrichtung am sich bewegenden Werkstück vorgenommen werden, beispielsweise direkt im Anschluss an eine Schleifmaschine.

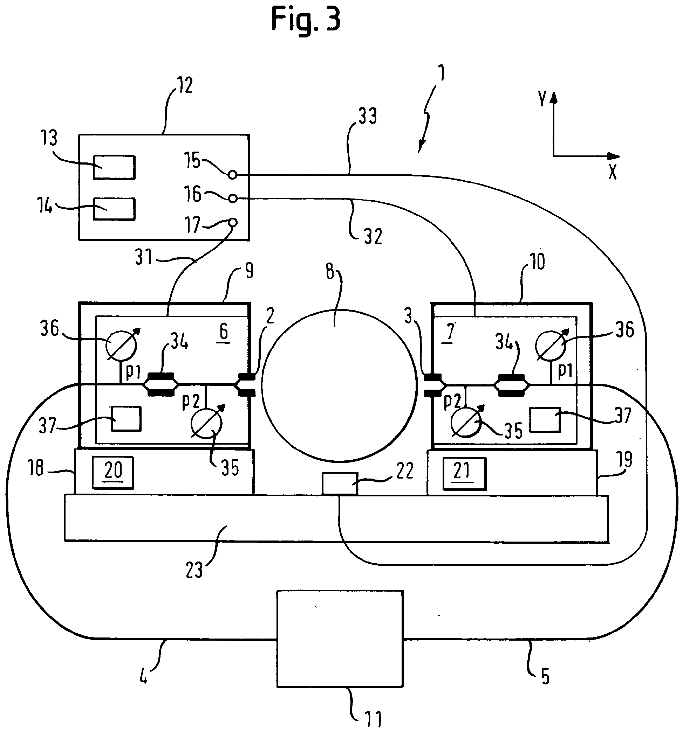

Fig. 3 zeigt eine Vorderansicht auf eine erfindungsgemäße Vorrichtung 1, bei der jede Messdüse 2, 3 mit dem ihr zugeordneten pneumatisch-elektrischen Wandler 6, 7 in einem Messkopf 9, 10 angeordnet ist. Die Druckluftversorgungskanäle 4, 5 werden von einer Kompressoreinheit 11 mit Druckluft versorgt.

Jeder pneumatisch-elektrische Wandler 6, 7 hat eine Messvordüse 34, einen Staudrucksensor 35, einen weiteren Drucksensor 36 und eine Abstandsermittlungseinrichtung 37. Die über den jeweiligen Druckluftversorgungskanal 4, 5 dem jeweiligen Wandler 6, 7 zugeführte Druckluft wird über die Messvordüse 34 und dann über die jeweilige Messdüse 2, 3 auf das Werkstück 8 geleitet. Über den Drucksensor 36 wird der Luftdruck p₁, der im Folgenden mit Eingangsdruck bezeichnet wird, im jeweiligen Druckluftversorgungskanal 4, 5 in Bezug auf die Strömungsrichtung der Druckluft stromaufwärts vor der Messvordüse 34 gemessen. Ferner wird vom jeweiligen Wandler 6, 7 der Staudruck p₂ zwischen der Messvordüse 34 und der jeweiligen Messdüse 2, 3 gemessen. Das Verhältnis zwischen Staudruck p₂ und Eingangsdruck p₁ ist ein Maß für den Abstand zwischen der jeweiligen Messdüse 2, 3 und dem Werkstück 8.

Zur Ermittlung des Abstands zwischen der jeweiligen Messdüse 2, 3 und dem Werkstück 8 kann beispielsweise der Eingangsdruck p₁ mit einer Regeleinrichtung auf einen vorgegebenen Druck geregelt werden. Der sich ergebende Staudruck p₂ kann dann mit dem Staudrucksensor 35 gemessen werden und der Staudrucksensor 35 kann diesen als elektrischen Messwert der Abstandsermittlungseinrichtung 37 zuführen. Die Abstandsermittlungseinheit 37 umfasst einen Speicher und einen Prozessor. Im Speicher ist eine Kennlinie, die für den vorgegebenen Druck den Abstand zwischen dem jeweiligen Wandler 6, 7 und dem Werkstück 8 als Funktion des Staudrucks spezifiziert, hinterlegt. Unter Verwendung der Kennlinie kann der Prozessor somit den Abstand zwischen dem jeweiligen Wandler 6, 7 und dem Werkstück 8 ermitteln und diesen als elektrisches Signal ausgeben.

Alternativ können sowohl der Eingangsdruck p₁ als auch der Staudruck p₂ gemessen werden und als elektrische Messwerte sodann an die Abstandsermittlungseinrichtung 37 übermittelt werden. Der Prozessor der Abstandsermittlungseinrichtung 37 ermittelt aus diesen Messwerten das Verhältnis zwischen Staudruck p₂ und Eingangsdruck p₁. Aus einer auf dem Speicher hinterlegten Kennlinie, die den Abstand zwischen der jeweiligen Messdüse 2, 3 und dem Werkstück 8 als Funktion des Verhältnisses zwischen Staudruck und Eingangsdruck angibt, kann der Prozessor den jeweiligen Abstand ermitteln. Alternativ kann der Prozessor den Abstand mittels einer auf dem Speicher hinterlegten Formel, in der das berechnete Verhältnis als Funktionswert verwendet wird, berechnen. Der jeweilige ermittelte Abstand kann sodann vom Wandler 6, 7 als elektrisches Signal, z.B. als digitales elektrisches Signal, ausgegeben werden.

Die Vorrichtung 1 umfasst eine Auswerteeinrichtung 12 mit einem Prozessor 13 und einer Anzeige 14. Die Auswerteeinrichtung 12 weist die elektrischen Eingänge 15, 16 und 17 auf. Der pneumatisch-elektrische Wandler 6 ist über eine elektrische Leitung 31 mit dem elektrischen Eingang 17 verbunden, so dass das vom pneumatisch-elektrischen Wandler 6 generierte elektrische Signal, das beispielsweise in digital codierter Form den ermittelten Abstand zwischen der Messdüse 2 und dem Werkstück 8 angibt, der Auswerteeinrichtung 12, beispielsweise über eine CAN-Bus-Verbindung, eine Profibus-Verbindung oder eine Ethernet-Verbindung, zugeführt wird. Ferner ist der pneumatisch-elektrische Wandler 7 über eine elektrische Leitung 32 mit dem Eingang 16 verbunden, so dass über das vom pneumatisch-elektrischen Wandler 7 erzeugte elektrische Signal der ermittelten Abstand zwischen der Messdüse 3 und dem Werkstück 8 ebenfalls der Auswerteeinheit 12 zugeführt wird.

Der Messkopf 9 ist auf einem Kreuzschlitten 18 und der Messkopf 10 auf einem Kreuzschlitten 19 angeordnet. Wie bereits in Bezug auf Fig. 1 beschrieben, kann mit den beiden Kreuzschlitten 18, 19 jeweils eine Verstellung der Messköpfe 9, 10 in X- und in Y-Richtung bewerkstelligt werden. Am Kreuzschlitten 18 kann eine Elektrobremse 20 und am Kreuzschlitten 19 kann eine Elektrobremse 21 angeordnet sein. Mit den Elektrobremsen 20, 21 ist es möglich, die beiden Kreuzschlitten 18, 19 jeweils in einer bestimmten X- und Y-Position zu arretieren, so dass die Messköpfe 9, 10 und damit die Messdüsen 2, 3 in einer gewünschten Position fixiert sind.

Ferner kann ein Abstandsmesser 22 zwischen den beiden Kreuzschlitten 18, 19 angeordnet sein. Insbesondere kann es sich bei dem Abstandsmesser 22 um einen Inkrementalgeber, der auch als Encoder bezeichnet wird, handeln, der den Verstellweg der beiden Kreuzschlitten 18, 19 zueinander misst und über eine elektrische Leitung 33 mit dem elektrischen Eingang 15 der Auswerteeinrichtung 12 verbunden ist, so dass ein elektrisches Signal, das ein Maß für den Abstand zwischen den Kreuzschlitten 18 und 19 damit auch für den Abstand zwischen den Messdüsen 2, 3 darstellt, der Auswerteeinrichtung 12 zugeführt wird.

Die beiden Kreuzschlitten 18, 19 mit den Elektrobremsen 20, 21 und der Abstandsmesser 22 sind auf einem Messtisch 23 angeordnet.

Der Prozessor 13 ist dazu ausgebildet, die Summe der beiden von den Wandlern 6, 7 ermittelten Abstände zu bilden, die sodann von dem über den Abstandsmesser 22 ermittelten Abstand der beiden Messköpfe abgezogen wird, woraus sich das Außenmaß des Werkstücks ergibt, welches beispielsweise über die Anzeige 14 angezeigt werden kann.

Der Prozessor 13 ist außerdem dazu ausgebildet, ein bestimmtes Außenmaß, beispielsweise das maximale Außenmaß, aus den gemessenen Außenmaßen zu ermitteln. Die Auswerteeinheit 12 steuert die Kreuzschlitten 18, 19 und die Elektrobremsen 20, 21 an und verstellt die Kreuzschlitten 18, 19 so, dass die Messdüsen 2,3 so positioniert werden, dass diese in Bezug auf die vertikale Y-Achse auf Höhe des bestimmten Außenmaßes, beispielsweise des maximalen Außenmaßes, angeordnet sind.

Die Auswerteeinheit 12 kann ferner dazu vorgesehen sein, den Verlauf der Außenmaße des Werkstücks 8 längs der in Fig. 2 gezeigten Z-Achse zu speichern, wenn das Werkstück 8 längs der Z-Achse zwischen den Messdüsen 2,3 hindurchbewegt und dabei gescannt wird.

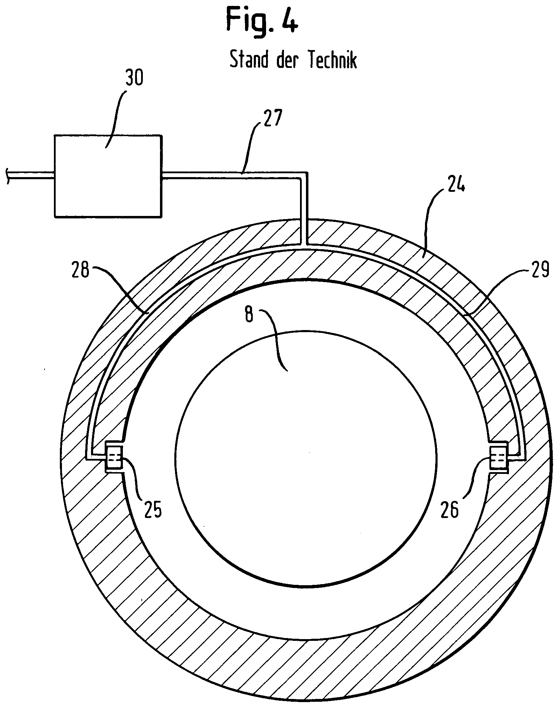

Die in Fig. 4 dargestellte herkömmliche Messvorrichtung umfasst einen Ring 24 mit zwei Messdüsen 25, 26 und einem gemeinsamen Druckluftversorgungskanal 27, der sich in zwei Teilkanäle 28 und 29 verzweigt. Über einen einzigen pneumatisch-elektrischen Wandler 30 wird der Staudruck gemessen, der sich aufgrund des Werkstücks 8 ergibt, über welches der Ring 24 geführt wurde.

Wie man ohne weiteres sieht, ist die Länge des Druckluftversorgungskanals 27 mit den beiden Teilkanälen 28 und 29 jeweils von den Messdüsen 25, 26 aus bis zum pneumatisch-elektrischen Wandler 30 bei der herkömmlichen Vorrichtung deutlich länger als gemäß der erfindungsgemäßen Vorrichtung. Zudem sind die Messdüsen 25, 26 für eine Reinigung schlecht zugänglich. Für Werkstücke 8 mit unterschiedlichen Durchmessern müssen jeweils eigene Ringe 24 verwendet werden.

### Bezugszeichenliste

- 1: Vorrichtung
- 2: Messdüse
- 3: Messdüse
- 4: Druckluftversorgungskanal
- 5: Druckluftversorgungskanal
- 6: pneumatisch-elektrischer Wandler
- 7: pneumatisch-elektrischer Wandler
- 8: Werkstück
- 9: Messkopf
- 10: Messkopf
- 11: Kompressor
- 12: Auswerteeinrichtung
- 13: Prozessor
- 14: Anzeige
- 15: elektrischer Eingang
- 16: elektrischer Eingang
- 17: elektrischer Eingang
- 18: Kreuzschlitten
- 19: Kreuzschlitten
- 20: Elektrobremse
- 21: Elektrobremse
- 22: Abstandsmesser
- 23: Messtisch
- 24: Ring
- 25: Messdüse
- 26: Messdüse
- 27: gemeinsamer Druckluftversorgungskanal
- 28: Teilkanal
- 29: Teilkanal
- 30: pneumatisch-elektrischer Wandler
- 31: elektrische Leitung
- 32: elektrische Leitung
- 33: elektrische Leitung
- 34: Messvordüse
- 35: Staudrucksensor
- 36: Drucksensor
- 37: Abstandsermittlungseinrichtung

## Patentansprüche

1. Vorrichtung (1) zur pneumatischen Messung eines Außenmaßes von Werkstücken (8) mit:
- zwei voneinander beabstandeten und mit ihren Austrittsöffnungen aufeinander zuweisenden Messdüsen (2,3),
- einem Druckluftversorgungskanal (4, 5) für die Messdüsen,
- einem Wandler (6,7) zur Umwandlung des sich in dem Druckluftversorgungskanal der Messdüsen bei einer Messung an einem Werkstück ergebenden Staudrucks in einen Messwert, insbesondere elektrischer Messwert,
wobei jeder Messdüse (2,3) ein eigener Wandler (6,7) zugeordnet ist und die Druckluftversorgungskanäle (4,5) von den Messdüsen bis zumindest zu den Wandlern voneinander getrennt sind, und
wobei der Abstand der Messdüsen (2,3) voneinander verstellbar und messbar ist,
**dadurch gekennzeichnet, dass**
die beiden Messdüsen (2,3) jeweils in einem Messkopf (9,10) angeordnet sind, wobei der Messkopf (9,10) jeweils auch den der Messdüse (2,3) zugeordneten Wandler (6,7) aufnimmt und ein Gehäuse für den Wandler (6,7) und die Messdüse (2,3) bildet, und wobei
die Messdüsen (2,3) jeweils auf einem Kreuzschlitten (18,19) angeordnet sind und für jeden Kreuzschlitten (18,19) eine Arretiereinrichtung (20,21) vorgesehen ist, um die Kreuzschlitten jeweils in einer gewünschten Position zu arretieren.

2. Vorrichtung nach Anspruch 1,
**dadurch gekennzeichnet, dass**
die Vorrichtung Auswertemittel (12, 37) umfasst, durch welche unter Verwendung der beiden Messwerte die Abstände der Messdüsen (2,3) von einem Werkstück (8) und aus den beiden Abständen das gesuchte Außenmaß bestimmbar ist.

3. Vorrichtung nach zumindest einem der vorstehenden Ansprüche,
**dadurch gekennzeichnet, dass**
die beiden Messdüsen (2,3) gemeinsam in einer ersten Richtung (Y-Achse) senkrecht zu ihrer Abstandsrichtung (X-Achse), insbesondere vertikal, relativ zum Werkstück beweglich sind oder umgekehrt.

4. Vorrichtung nach Anspruch 3,
**dadurch gekennzeichnet, dass**
die beiden Messdüsen (2,3) gemeinsam in einer zweiten Richtung (Z-Achse) senkrecht zu ihrer Abstandsrichtung (X-Achse) und senkrecht zur ersten Richtung (Y-Achse), insbesondere horizontal, relativ zum Werkstück (8) beweglich sind oder umgekehrt.

5. Vorrichtung nach zumindest einem der vorstehenden Ansprüche,
**dadurch gekennzeichnet, dass**
als Arretiereinrichtung (20,21) eine Elektrobremse vorgesehen ist.

6. Verfahren zur Messung eines Außenmaßes eines Werkstücks (8) mit einer Vorrichtung (1) nach zumindest einem der vorhergehenden Ansprüche,
**dadurch gekennzeichnet, dass**
das Werkstück (8) zwischen den beiden Messdüsen (2,3) positioniert wird, dass die beiden Messdüsen gemeinsam in einer ersten Richtung (Y-Achse) senkrecht zur Abstandsrichtung der beiden Messdüsen (X-Achse) in eine gewünschte Messposition relativ zum Werkstück gebracht werden oder umgekehrt und dann die Messung gestartet wird.

7. Verfahren nach Anspruch 6,
**dadurch gekennzeichnet, dass**
die Positionierung der beiden Messdüsen (2,3) anhand des gemessenen Abstands und damit der Außenmaße des Werkstücks (8) erfolgt.

8. Verfahren nach Anspruch 6 oder 7,
**dadurch gekennzeichnet, dass**
die beiden Messdüsen (2,3) gemeinsam in einer zweiten Richtung (Z-Achse) senkrecht zur ersten Richtung (Y-Achse) und zur Abstandsrichtung der beiden Messdüsen (X-Achse) relativ zum Werkstück bewegt werden oder umgekehrt und das gesuchte Außenmaß kontinuierlich oder in bestimmten Abständen längs des Werkstücks ermittelt wird.

## Claims

1. An apparatus (1) for the pneumatic measurement of an outer dimension of workpieces (8), comprising:
- two measurement nozzles (2,3) which are spaced apart from one another and whose outlet openings face one another;
- a compressed air supply passage (4, 5) for the measurement nozzles; and
- a converter (6,7) for converting the dynamic pressure, which results in the compressed air supply passage of the measurement nozzles on a measurement at a workpiece, into a measurement value, in particular into an electrical measurement value,
wherein a separate converter (6,7) is associated with each measurement nozzle (2,3) and the compressed air supply passages (4,5) are separated from one another from the measurement nozzles up to at least the converters; and
wherein the spacing of the measurement nozzles (2,3) from one another is adjustable and measurable,
**characterized in that**
the two measurement nozzles (2,3) are each arranged in a measurement head (9,10), with the measurement head (9,10) in each case also receiving the converter (6,7) associated with the measurement nozzle (2,3) and forming a housing for the converter (6,7) and the measurement nozzle (2,3); and
**in that** the measurement nozzles (2,3) are each arranged on a cross-slide (18,19) and a locking device (20,21) is provided for each cross-slide (18,19) to lock the cross-slides in a desired position in each case.

2. An apparatus in accordance with claim 1,
**characterized in that**
the apparatus comprises evaluation means (12, 37) by which the spacings of the measurement nozzles (2,3) from a workpiece (8) can be determined using the two measurement values and the sought outer dimension can be determined from the two spacings.

3. An apparatus in accordance with at least one of the preceding claims,
**characterized in that**
the two measurement nozzles (2,3) are movable together in a first direction (Y axis) perpendicular to their spacing direction (X axis), in particular vertically, relative to the workpiece or vice versa.

4. An apparatus in accordance with claim 3,
**characterized in that**
the two measurement nozzles (2,3) are movable together in a second direction (Z axis) perpendicular to their spacing direction (X axis) and perpendicular to the first direction (Y axis), in particular horizontally, relative to the workpiece (8) or vice versa.

5. An apparatus in accordance with at least one of the preceding claims,
**characterized in that**
an electric brake is provided as the locking device (20,21).

6. A method of measuring an outer dimension of a workpiece (8) using an apparatus (1) in accordance with at least one of the preceding claims,
**characterized in that**
the workpiece (8) is positioned between the two measurement nozzles (2,3); **in that** the two measurement nozzles are moved together into a desired measurement position relative to the workpiece in a first direction (Y axis) perpendicular to the spacing direction of the two measurement nozzles (X axis) or vice versa and then the measurement is started.

7. A method in accordance with claim 6,
**characterized in that**
the positioning of the two measurement nozzles (2,3) takes place on the basis of the spacing measured and thus on the basis of the outer dimensions of the workpiece (8).

8. A method in accordance with claim 6 or claim 7,
**characterized in that**
the two measurement nozzles (2,3) are moved together relative to the workpiece in a second direction (Z axis) perpendicular to the first direction (Y axis) and to the spacing direction of the two measurement nozzles (X axis) or vice versa and the sought outer dimension is determined continuously or at specific spacings along the workpiece.

## Revendications

1. Dispositif (1) pour la mesure pneumatique d'une dimension extérieure de pièces à oeuvrer (8), comportant :
- deux buses de mesure (2, 3) espacées l'une de l'autre et dont les orifices de sortie sont dirigés l'un vers l'autre,
- un canal d'alimentation en air comprimé (4, 5) pour les buses de mesure,
- un transducteur (6, 7) pour convertir la pression dynamique, résultant dans le canal d'alimentation en air comprimé des buses de mesure lors d'une mesure sur une pièce à oeuvrer, en une valeur mesurée, en particulier en une valeur mesurée électrique,
un propre transducteur (6, 7) étant associé à chaque buse de mesure (2, 3) et les canaux d'alimentation en air comprimé (4, 5) étant séparés les uns des autres depuis les buses de mesure au moins jusqu'aux les transducteurs, et
la distance des buses de mesure (2, 3) l'une de l'autre pouvant être ajustée et mesurée,
**caractérisé en ce que**
les deux buses de mesure (2, 3) sont disposées chacune dans une tête de mesure (9, 10), la tête de mesure (9, 10) recevant également le transducteur respectif (6, 7) associé à la buse de mesure (2, 3) et formant un boîtier pour le transducteur (6, 7) et pour la buse de mesure (2, 3), et
les buses de mesure (2, 3) sont chacune disposées sur un chariot croisé (18, 19), et un dispositif de verrouillage (20, 21) est prévu pour chaque chariot croisé (18, 19) afin de verrouiller les chariots croisés dans une position souhaitée.

2. Dispositif selon la revendication 1,
**caractérisé en ce que**
le dispositif comprend des moyens d'évaluation (12, 37) permettant de déterminer les distances des buses de mesure (2, 3) par rapport à une pièce à œuvrer (8) à l'aide des deux valeurs mesurées, et de déterminer la dimension extérieure recherchée à l'aide des deux distances.

3. Dispositif selon l'une au moins des revendications précédentes,
**caractérisé en ce que**
les deux buses de mesure (2, 3) peuvent être déplacées ensemble dans une première direction (axe Y) perpendiculairement à leur direction d'écartement (axe X), en particulier verticalement, par rapport à la pièce à œuvrer, ou inversement.

4. Dispositif selon la revendication 3,
**caractérisé en ce que**
les deux buses de mesure (2, 3) peuvent être déplacées ensemble dans une seconde direction (axe Z) perpendiculairement à leur direction d'écartement (axe X) et perpendiculairement à la première direction (axe Y), en particulier horizontalement, par rapport à la pièce à œuvrer (8), ou inversement.

5. Dispositif selon l'une au moins des revendications précédentes,
**caractérisé en ce que**
un frein électrique est prévu comme moyen de verrouillage (20, 21).

6. Procédé pour mesurer une dimension extérieure d'une pièce à œuvrer (8) au moyen d'un dispositif (1) selon l'une au moins des revendications précédentes,
**caractérisé en ce que**
la pièce à oeuvrer (8) est positionnée entre les deux buses de mesure (2, 3), **en ce que**
les deux buses de mesure peuvent être déplacées ensemble dans une première direction (axe Y) perpendiculairement à la direction d'écartement des deux buses de mesure (axe X) jusque dans une position de mesure souhaitée par rapport à la pièce à œuvrer ou inversement, et ensuite, la mesure est lancée.

7. Procédé selon la revendication 6,
**caractérisé en ce que**
le positionnement des deux buses de mesure (2, 3) s'effectue sur la base de la distance mesurée et donc des dimensions extérieures de la pièce à œuvrer (8).

8. Procédé selon la revendication 6 ou 7,
**caractérisé en ce que**
les deux buses de mesure (2, 3) peuvent être déplacées ensemble dans une seconde direction (axe Z) perpendiculairement à la première direction (axe Y) et à la direction d'écartement des deux buses de mesure (axe X) par rapport à la pièce à oeuvrer, ou inversement, et la dimension extérieure recherchée est déterminée de manière continue ou à des distances définies le long de la pièce à œuvrer.
